# EUROPEAN PATENT APPLICATION

(11) **EP 4 549 997 A1**
(43) Date of publication of application: **07.05.2025**
(21) Application number: 24200628.6
(22) Date of filing: 16.09.2024
(51) Int. Cl.: G01S 13/58, G01S 13/931, G01S 13/42, G01S 13/72

(54) **RADAR METHOD AND APPARATUS WITH TARGET VELOCITY MEASUREMENT**

(30) Priority: 02.11.2023 KR 20230150134
(71) Applicant: Samsung Electronics Co., Ltd, Suwon-si, Gyeonggi-do 16677 (KR)
(72) Inventor: Cho, Young Rae, 16678 Suwon-si (KR); Khang, Seung Tae, 16678 Suwon-si (KR); Kim, Jong-Sok, 16678 Suwon-si (KR); Jeon, Jinyong, 16678 Suwon-si (KR); Choi, Ho-Ik, 16678 Suwon-si (KR)
(74) Representative: Arnold & Siedsma

(57) **Abstract**

A method of measuring a velocity vector of a target object is provided. The method includes: obtaining pieces of radar data obtained by detecting the target object; based on the pieces of radar data, extracting velocity vectors for respective points that correspond to the detected target object; and calculating the velocity vector of the target object based on the velocity vectors.

## Description

### BACKGROUND

### 1. Field

The following description relates to a method of determining a velocity vector of a target object and to an electronic device.

### 2. Description of Related Art

In traditional radar technology, a radar may be used to measure a velocity of a target by utilizing the Doppler effect. For a stationary object, a radar may measure distance through time delay. For a moving target, the radar may measure a velocity through changes in a signal frequency. Using radar technology, data may be transmitted and received and information on distance and velocity may be calculated through Fourier transform.

### A. Conventional technology

In the case of a conventional radar, the velocity of the target may be measured using information on a frequency deformed by the Doppler effect in the process of receiving the transmitted waveform. In the case of a stationary object, only a time delay occurs in the process of the waveform transmitted from the radar from reaching the object to being reflected and received, and thus the distance is measured. However, if the target moves, the difference between the frequency of the received signal and the frequency of the transmitted signal occurs. Therefore, the velocity of the target may be determined through this frequency change value. In the case of frequency modulated continuous wave (FMCW) the distance and velocity value of the target are calculated by applying Fourier transform to the data obtained by repeatedly transmitting and receiving multiple signals at regular time intervals using these properties.

At this time, there are several transmitters in charge of transmitting signals and receivers in charge of receiving signals in the radar, and there are also several combinations of transmitters and receivers, each of which is called a channel. Since there is some physical separation between each transmitter and receiver, there is a difference in the physical distance at which the signal moves according to the channel, so the phase of the signal is different from each other, and the information is used to estimate the angle between the target and the radar.

In general, radars record signals that convert transmitted and received signals into digital signals through analog to digital converters (ADC). In addition, the transmitted signals are aligned according to the transmission order according to the set time interval. In addition, the data is sorted once more based on the distance value according to the channel, and a three-dimensional data cube is finally obtained. When Fourier transform is applied to each axis of the data, the data is converted into a data cube containing information of (distance, velocity, angle). Finally, a widely used Constant false alarm rate (CFAR) target detector is applied to extract potential targets, and distance information and velocity information (x, y, v) for those targets are obtained.

### B. Problems of the Prior Art

In using a conventional radar in a vehicle, information about the target's surrounding environment can be obtained by performing a Fourier transform on each axis of radar data. The process of measuring the target's velocity in the above process estimates the target's velocity value by identifying the frequency change of the received signal caused by the Doppler effect through Fourier transform. However, conventional methods or devices for measuring velocity in a radar based on the Doppler effect cannot measure velocity values in any direction other than the line of sight formed by the radar and the target, because the Doppler effect phenomenon of the target due to the target's velocity value affects only the gaze direction. For example, if a target moves in a direction perpendicular to the radar's gaze direction (the target position changes, but the distance between the target and the radar does not change), it is determined as a target that has stopped despite the target being moving. In addition, a unique solution cannot be obtained with only one velocity vector projected in the gaze direction between the target and the radar, and as a result, the actual velocity of the target cannot be determined. Therefore, velocity measurement methods or devices in a radar using the Doppler effect cannot acquire the actual movement of the target.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In order to overcome or reduce at least one of the disadvantages of the prior art described above, a plurality of detection results obtained from one target are combined using one radar device to calculate an actual velocity direction for the corresponding target. The velocity of the target measured by the radar in the prior art is a value obtained by projecting the actual velocity of the target in the line of sight in which the radar looks at the target, and since there may be a difference in both size and direction from the motion vector of the actual target, it is difficult to determine the movement path for the target based on this value.

In the case of recently improved radar devices, a plurality of detection results may be obtained from a single target, wherein the actual target velocity and the velocity vector acquired through the radar device form one right-angled triangle, and as a result, a set of multiple velocity vectors acquired from different detection results extracted from one target forms one circle. In the present invention, circular fitting is performed on a plurality of velocity vector data acquired by a radar device to use the above fact, and the actual velocity of the detected target may be calculated using the result of circular fitting.

In one general aspect, a method of determining a velocity vector of a target object includes: obtaining pieces of radar data obtained by detecting the target object; based on the pieces of radar data, extracting velocity vectors for respective points that correspond to the detected target object; and calculating the velocity vector of the target object based on the velocity vectors.

The calculating the velocity vector may include arranging starting points of the velocity vectors to a same reference point.

The calculating the velocity vector may further include: generating an approximation circle based on endpoints of the velocity vectors as arranged to the reference point; and calculating the velocity vector of the target object based on the reference point and a feature of the approximation circle.

The calculating the velocity vector of the target object may further include: generating line segments that are orthogonal to the velocity vectors, respectively, wherein the line segments originate at the endpoints of the respective velocity vectors as arranged to the reference point; and calculating the velocity vector of the target object based on intersections of the orthogonal line segments and based on the reference point.

The starting point of the velocity vector of the target object may correspond to the reference point and the endpoint of the velocity vector may correspond to a point that is based on the intersections.

The method may further include: generating a data cube by performing a Fourier transformation on the pieces of radar data to obtain, for each of the pieces of radar data, a distance value, a radial velocity value, and an angle value; and labeling and clustering, as pieces of data about the target object, pieces of data extracted by applying the data cube to a target detector configured for identifying the target object.

The extracting of the velocity vectors ma include: determining first reliabilities of a set of velocity vectors, and selecting the velocity vectors from among the set of velocity vectors based on the velocity vectors having first reliabilities that satisfy a first reliability threshold.

The velocity vectors may be extracted based at least in part on determining that they correspond to a surface of the target object.

The obtaining the pieces of radar data may include: measuring second reliabilities for the respective pieces of radar data; and selecting, from among the pieces of radar data, pieces of the radar data whose second reliability is greater than a second threshold value, wherein the velocity vectors are extracted based on the selected pieces of radar data.

1 The pieces of radar data may be obtained from a bounding box provided by a radar device.

The velocity vector of the target object may represent an actual velocity of the target object and may include a vector component other than a line-of-sight vector component. The line-of-sight vector component refers to a vector that represents the straight-line path between the radar (or any observation point) and the target object. Put differently, the line-of-sight vector represents the direct path that a radar signal takes to reach an object and return to the radar sensor.

In another general aspect, an electronic device includes: one or more processors; and memory storing instructions configured to cause the one or more processors to: obtain pieces of radar data obtained by detecting a target object; based on the pieces of radar data, extract velocity vectors for respective points that correspond to the detected target object; and calculate a velocity vector of the target object based on the velocity vectors.

The calculating the velocity vector may include arranging starting points of the velocity vectors to be at a same reference point.

The calculating the velocity vector may further include: generating an approximation circle based on endpoints of the velocity vectors as arranged at the reference point, wherein the circle is fitted to the endpoints; and calculating the velocity vector of the target object based on the reference point and a feature of the approximation circle.

The calculating the velocity vector may further include: finding intersections between lines normal to endpoints of the velocity vectors as arranged at the reference point; and calculating the velocity vector of the target object based on the intersections.

The instructions may be further configured to cause the one or more processors to: generate a data cube by performing Fourier transformation on the pieces of radar data to obtain, for each piece of radar data, a distance value, a radial velocity value, and an angle value; and label, as pieces of data about the target object, and cluster, pieces of data extracted by applying the data cube to a target detector configured for identifying the target object.

The instructions may be further configured to cause the one or more processors to: determine first reliabilities of a set of velocity vectors, and select the velocity vectors from among the set of velocity vectors based on the velocity vectors having first reliabilities that satisfy a first reliability threshold.

The velocity vector for the target object may be determined based on pieces of radar data determined to correspond to a surface of the target object.

The processor may be further configured to measure a second reliability for each of the plurality of pieces of radar data and detect and cluster pieces of radar data, from among the plurality of pieces of radar data, in which the second reliability is greater than or equal to a second threshold value.

The instructions may be further configured to cause the one or more processors to obtain pieces of data about the target object in the form of a bounding box provided with the radar data from a radar device.

Other features and aspects will be apparent from the following detailed description, the drawings, and the claims.

### BRIEF DESCRIPTION OF THE DRAWINGS

FIG. 1 illustrates an example method of measuring a velocity of a target, according to one or more embodiments.
FIG. 2 illustrates an example method of measuring a velocity using a radar, according to one or more embodiments.
FIG. 3 illustrates an example of an operation of a radar, according to one or more embodiments.
FIGS. 4A and 4B illustrate an example method of measuring a velocity of a target, according to one or more embodiments.
FIG. 5 illustrates an example of pieces of radar data, according to one or more embodiments.
FIGS. 6 and 7 illustrate an example method of measuring a velocity of a target, according to one or more embodiments.
FIG. 8 illustrates an example electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

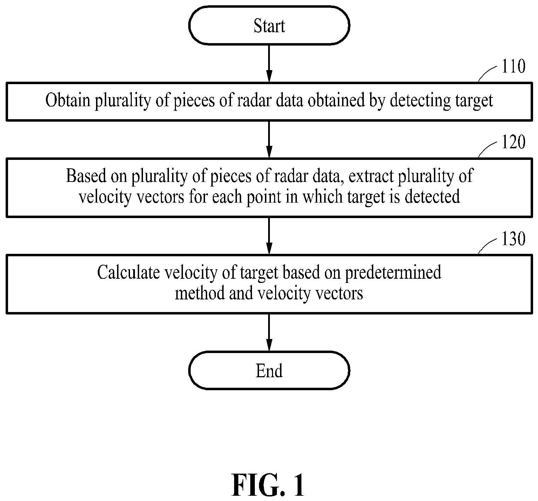

FIG. 1 illustrates an example method of measuring a velocity of a target, according to one or more embodiments.

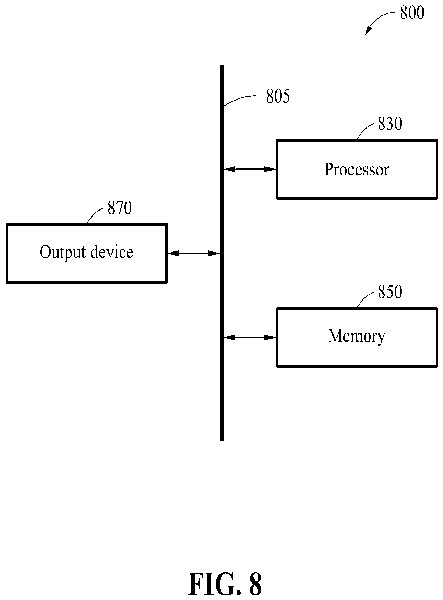

Operations 110 to 130 are described as being performed by an electronic device 800 and/or a processor 830 of the electronic device 800 illustrated in FIG. 8. The processor 830 may control the overall operation of the electronic device 800. The processor 830 may be implemented as an array of a plurality of logic gates or as a combination of a general-purpose microprocessor and a memory in which instructions executable by the microprocessor are stored. Although reference is made to the processor 830, examples and embodiments may be implemented in other types of hardware. Moreover, the processor 830 may be implemented as a combination of one or more processors of varying types, described below. Operations 110 to 130 are not limited to the processor 830 and they may be performed by any suitable electronic device and in any suitable system.

The processor 830 may measure a velocity of a target. Here, "measure" is short for computing a velocity value based on measured data.

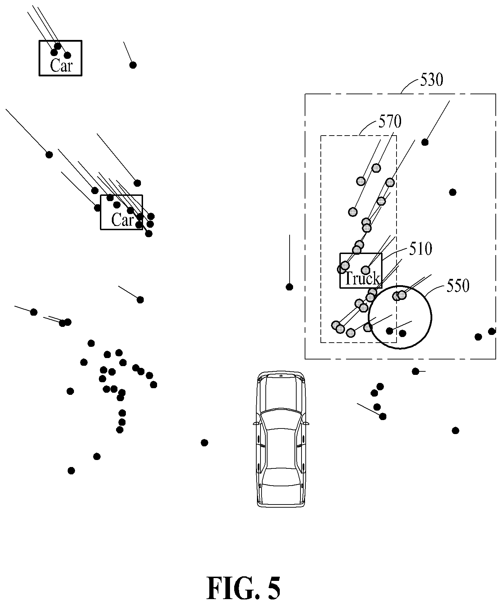

In operation 110, the processor 830 may obtain pieces of radar data obtained by detecting the target (e.g., point cloud data). The pieces of radar data are described in detail below with reference to FIG. 5.

In operation 120, the processor 830 may extract velocity vectors for respective points in the pieces of radar data for which the target is detected. That is, the target may be detected and velocity vectors of pieces of data corresponding to the target may be extracted.

The processor 830 may obtain a data cube by performing Fourier transformation on the pieces of radar data to obtain a distance value, a radial velocity value, and an angle value of the target (for respective pieces of radar data). The processor 830 may label and cluster pieces of data extracted by applying the data cube to a target detector as pieces of data about the target. A target detector in the context of radar systems is a computational tool or module designed to identify and distinguish target objects within the radar's field of view based on the data received. It typically involves algorithms capable of recognizing patterns or characteristics that define a target amidst other signals or noise. The target detector processes the incoming radar data to detect objects, which might include vehicles or other entities, based on predefined criteria such as size, shape, movement patterns, and signal characteristics.

As an example, applying the data cube to the target detector may comprise generating a data cube from the radar data through the Fourier transformation. This data cube may organize the radar data into a three-dimensional array with axes for three values such as the distance, the radial velocity, and the angle, each preferably providing a different perspective of the target's location and movement.

Then the data cube is applied to the target detector, which for example utilizes the structured data to more effectively isolate and identify potential targets. The process might involve any one of the following:
Filtering: Removing data points that do not meet at least one threshold for target characteristics.
Clustering: Grouping similar data points that are likely to represent the same target, based for example on their proximity and/or motion vectors in the data cube.
Labeling: Assigning identifiers to the clusters that link them to specific target(s) or the type(s) of target(s).

The processor 830 may measure a first reliability to determine whether the velocity vectors are detection results for the target. The processor 830 may detect/select velocity vectors, from among the velocity vectors, in which the first reliability is greater than or equal to a first threshold value.

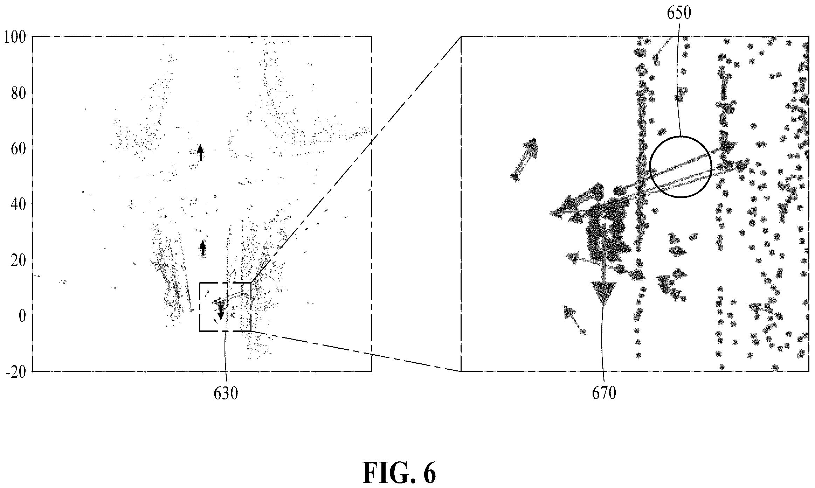

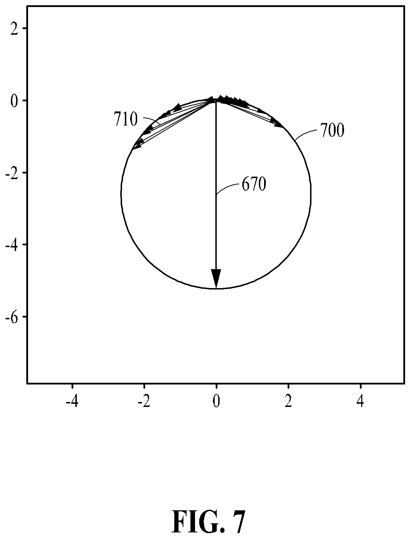

The processor 830 may determine whether the detection results for the target are pieces of data corresponding to a surface of the target. The reliability of the velocity vector is described with reference to FIGS. 6 and 7.

In operation 130, the processor 830 may calculate the velocity of the target based on a predetermined method and the velocity vectors.

For example, the predetermined method may be a circle-fitting method. The predetermined method, e.g., the circle-fitting method, may involve arranging starting points of the velocity vectors with respect to a reference point. The predetermined method may generate an approximation circle based on endpoints of the velocity vectors (as arranged with respect to the reference point) and may calculate the velocity vector of the target based on the reference point and a parameter of the approximation circle.

In another example, the predetermined method may be an orthogonal line segment intersection method. The predetermined method, e.g., the orthogonal line segment method, may involve generating line segments that are orthogonal to the velocity vectors, respectively, at the endpoints of the velocity vectors (as arranged with respect to the reference point) and may calculate the velocity of the target based on intersections of the orthogonal line segments and the reference point.

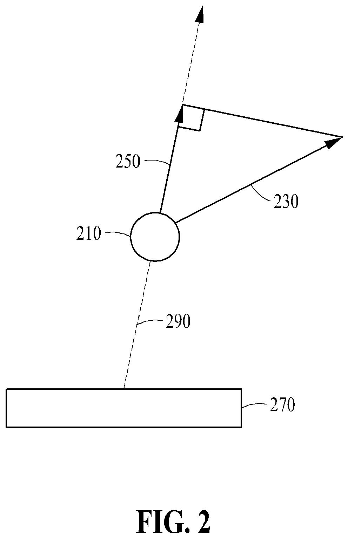

FIG. 2 illustrates an example method of measuring a velocity using a radar, according to one or more embodiments.

The description provided with reference to FIG. 1 is applicable to FIG. 2.

A radar 270 may transmit a signal through a transmitter and may receive the signal as returned from an object through a receiver. In the case of a stationary object, the processor 830 may calculate a distance to the object by measuring the time taken by the transmitted signal return from the object (which can be used to find the time taken for the transmitted signal to reach the object). However, when the object is moving, the frequency of the received return signal changes due to the Doppler effect, and the processor 830 may measure a velocity of a target 210 using the changed frequency. For example, the radar 270 may typically measure the velocity of the target 210 using frequency modulated continuous-wave (FMCW) technology. An FMCW radar (e.g., the radar 270) may obtain multiple pieces of signal data by repeating signal-transmission and signal-reception processes at a predetermined interval. The processor 830 may calculate a distance and a speed value by applying Fourier transform to multiple pieces of signal data.

The radar 270 may have multiple transmitters and receivers. A transmitter-receiver pair may be referred to as a channel. Phase differences between the received signals of the respective channels may depend on their respective physical distances to the target 210. The processor 830 may estimate an angle between the target 210 and the radar 270 using the phase differences of the received signals. More specifically, the radar 270 may store the received signals as digital signals, which may be converted to digital from received analog signals by an analog to digital converter (ADC). In addition, when storing the received digital signals, the processor 830 may arrange the stored received signals in an order corresponding to their transmission order. Furthermore, the processor 830 may arrange the pieces of data (e.g., 3D points) once more based on the distance value according to the channel to finally obtain a raw data cube (e.g., a point cloud). The processor 830 may convert the raw data cube into a final data cube that includes additional information (e.g., information on the distances, velocities, and angles of respective points) by applying Fourier transform to each axis of the raw data cube. The processor 830 may apply the final data cube to a target detection algorithm (e.g., a constant false alarm rate (CFAR)). The target detection algorithm may, based on the final data cube, extract a potential target (e.g., the target 210) and may also obtain distance and speed information of the target 210.

Referring to FIG. 2, as described next, the processor 830 may measure/calculate a radial velocity 250 of the target 210 using the radar 270. For reference, "line of sight direction" refers to the direction from an observation point (e.g., a center of the radar 270) to the target 210. In addition, the radial velocity vector 250 is the component of the velocity vector of the target 210 along the line of sight direction. The radar 270 may measure the radial velocity 250 of the target 210 based on the Doppler effect, and the Doppler effect may influence the radar 270 primarily in the line of sight direction. For this reason, when an actual velocity vector 230 of the target 210 differs (in direction) from a measurement direction 290 of the radar 270, the radar 270 may be influenced by the Doppler effect primarily in the measurement direction 290 and the radial velocity 250 may be primarily measured according to the Doppler effect. When the measurement direction 290 of the radar 270 and the actual moving direction of the target 210 are perpendicular, even though the target 210 is moving, the radar 270 may measure the radial velocity 250 of the target 210 to be zero and it may appear to the processor 830 (according to the zero radial velocity) that the target 210 is stationary.

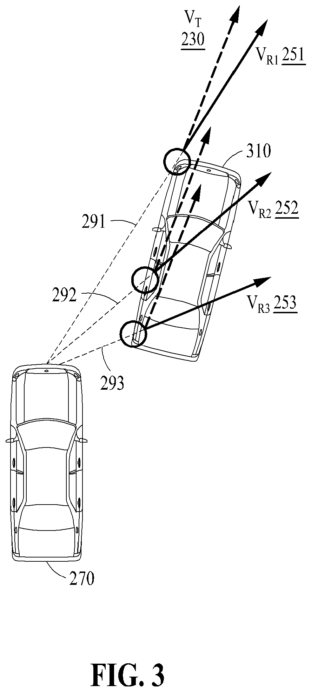

FIG. 3 illustrates an example operation of a radar, according to one or more embodiments.

The description of FIGS. 1 and 2 is applicable to FIG. 3.

Referring to FIG. 3, the processor 830 may obtain multiple detection results for a target 310 (e.g., the target 210 of FIG. 2) using the radar 270. The processor 830 may obtain multiple pieces of data of the radar 270 from the detection results.

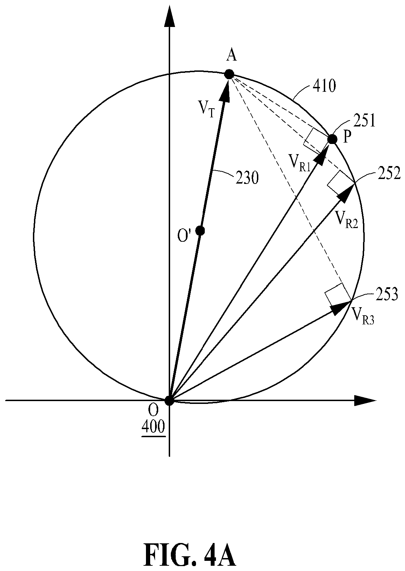

The radar 270 may obtain the pieces of data of the radar 270 from a surface of the target 310. In the example of FIG. 3, where there are three pieces of obtained data of the surface, the processor 830 may obtain/compute three radial velocity vectors 251 to 253 from the three respective pieces of data of the radar 270 (the quantity of three is an example). The radial velocity vectors 251 to 253 may be radial velocities of the target 310 corresponding to respective measurement directions 291 to 293 from the radar 270. A method of calculating the actual velocity 230 of the target 310 from the multiple radial velocity vectors 251 to 253 is described with reference to FIGS. 4A to 8.

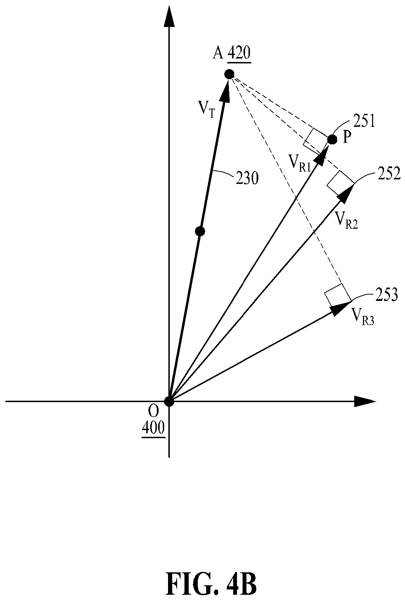

FIGS. 4A and 4B illustrate an example method of measuring a velocity of a target, according to one or more embodiments.

The description of FIGS. 1 to 3 is applicable to FIGS. 4A and 4B.

Referring to FIGS. 4A and 4B, the processor 830 may arrange starting points (heads) of the respective velocity vectors 251 to 253 with respect to a reference point 400 (origin O).

The processor 830 may perform circle-fitting to generate an approximation circle 410 that passes through (or is close to) endpoints of the plurality of radial velocity vectors 251 to 253 arranged with respect to the reference point 400. The approximation circle 410 may include the endpoints of the plurality of radial velocity vectors 251 to 253. In an ideal case, the circle generated based on the radial velocity vectors (having been extracted from pieces of radar data about the velocity of the target 210) may be a circle that includes all endpoints of the radial velocity vectors. However, since the pieces of radar data measured for the actual target 210 and the extracted radial velocity vectors may include errors, the processor 830 may generate a circle that is an approximation, i.e., the approximation circle 410 to accommodate the errors. In the generated approximation circle 410, the processor 830 may determine a direction passing through the reference point 400 and the center of the approximation circle 410 and may use that direction as a direction of the actual velocity 230 of the target 210. In addition, the diameter of the approximation circle 410 may be used as the magnitude of the actual velocity 230 of the target 210.

The term "circle" and "approximate circle", as used herein refers to a family of round shapes that may have an approximate center or multiple approximate centers. The shapes are generally round, but may be somewhat circular, somewhat oval, or the like. In the context of this disclosure, the "ideal case" circle refers to an "exact circle", i.e., a geometric circle. Fundamentally, using two velocity vectors without error can generate an exact circle, and based on this circle, the actual velocity vectors can be derived. However, in the case of an approximate circle, as noted, this encompasses oval and similar round shapes. Even with approximate circles, it's possible to create an "exact circle" by considering errors to extract the actual velocities. However, if an elliptical approximate circle is generated, two centers are formed. Therefore, the actual velocity can be determined by the velocity vector that passes through the midpoint of these two centers and a reference point. The endpoint of this velocity vector would be the intersection point with the ellipse. Similarly, even if a circular shape with multiple centers is formed, the actual velocity can be determined by the velocity vector passing through the midpoint of these centers (e.g., a cluster's center) and a reference point.

As noted above, in one example implementation, the processor 830 may perform an orthogonal line segment intersection method. This may involve calculating an intersection of line segments that are orthogonal to the endpoints of the respective radial velocity vectors 251 to 253 (as arranged with respect to the reference point 400). These orthogonal line segments may intersect at an intersection point 420. In an ideal case, all of the orthogonal line segments intersect the intersection point 420. However, since the extracted radial velocity vectors may have error components (due to errors in the pieces of radar data measured for the actual target 210) it may not be possible to generate an orthogonal line segment intersection point 420 through which all of the orthogonal line segments intersect. Rather, the processor 830 may generate multiple intersection points of the orthogonal segments. To handle the multiple intersection points, the processor 830 may use a center-of-mass method. That is, the processor 830 may find a center of mass of the coordinates of the generated intersection points and use the center of mass coordinate as the intersection point 420. Or, the processor may select, as the intersection point 420, from among the intersection points, the coordinates of an intersection point with the highest distribution according to a distribution of the intersection points. Regardless of how the orthogonal line intersection point 420 is generated, the processor 830 may set an actual velocity vector (representing the actual velocity 230 of the target 210) as the vector with (i) the reference point 400 as a starting point and (ii) the determined orthogonal line segment intersection point 420 as an endpoint.

FIG. 5 illustrates an example of pieces of radar data, according to one or more embodiments.

The description of FIGS. 1 to 4B is applicable to FIG. 5.

The processor 830 may collect pieces of radar data using a radar. The processor 830 may measure reliabilities for the respective pieces of radar data and may detect and cluster pieces of radar data, from among the plurality of pieces of radar data, whose respective second reliabilities are greater than or equal to a second threshold value.

To elaborate, the processor 830 may collect detection results 530 (e.g., pieces of data in point cloud format) for a truck 510 using a radar. The processor 830 may determine the second reliabilities for the respective pieces/points in the detection results 530.

For example, the processor 830 may normalize distribution of the detection results 530 according to the second reliabilities. Specifically, the processor 830 may set (e.g., normalize) the second reliabilities to have the normal distribution, and may set the second reliabilities to decrease for each difference in standard deviation (σ) on the normal distribution (e.g., for a part in which the standard deviation differs from the average by more than or equal to 2σ, the second reliability may be set to 0.2). The processor 830 may assign the second reliabilities to the respective points/pieces in the detection results 530 and may then detect/select, from among the detection results 530, pieces/points of the detection results whose second reliability is greater than or equal to the second threshold value (e.g., 0.3). To summarize, as shown in FIG. 5, the processor 830 may form a cluster of detection results 570 that have high second reliability by excluding portions of detection results 550 with low second reliabilities. In addition, the processor 830 may consider distribution of the clustered detection results 570 on a road coordinate plane (e.g., in a plane parallel to the road surface or in the plane of the road surface) and based thereon may label the detection results 570 as a truck, passenger car, or the like. However, the method of measuring the second reliability according to the described example is not limited to the normal distribution implementation; and various other methods may be used.

FIGS. 6 and 7 illustrate an example method of measuring a velocity of a target, according to one or more embodiments.

The description of FIGS. 1 to 5 is applicable to FIGS. 6 and 7.

Referring to FIG. 6, the processor 830 may use a radar to cluster pieces of radar data about (and corresponding to) a target among pieces of radar data 610. An enlarged view 630 of FIG. 6 shows pieces of radar data clustered for the target. The processor 830 may measure/determine first reliabilities to determine whether velocity vectors in the clustered pieces of radar data are to be used as detection results for the target.

For example, the processor 830 may normalize distribution of magnitudes of the velocity vectors. The processor 830 may set the first reliabilities of respective velocity vectors at an average to 1 (e.g., a normal distribution) and may set the first reliabilities to decrease for each difference in standard deviation (σ) on a normal distribution (e.g., for a part in which the standard deviation differs from the average by more than or equal to 2σ, the first reliability may be set to 0.1). The processor 830 may assign the first reliabilities to the respective velocity vectors and may detect/select, from among the velocity vectors, the velocity vectors whose first reliabilities are greater than or equal to a first threshold value (e.g., 0.2) among the velocity vectors. In sum, as shown in FIG. 6, the processor 830 may extract velocity vectors with sufficiently high first reliabilities by excluding the velocity vectors 650 with low first reliabilities.

In addition, the processor 830 may determine whether the velocity vectors determined to have high reliability correspond to a surface of the target. Since the processor 830 has measured the reliabilities based on the magnitudes of the velocity vectors, when the coordinate of a starting point of a velocity vector actually measured is apart from the coordinates of starting points of other velocity vectors (for example is apart from the average of the coordinates of the starting points of the other velocity vectors) for more than a predetermined level, then the velocity vector may be determined not to correspond to the surface of the target. Accordingly, the processor 830 may only extract, from among the velocity vectors with high reliability, the velocity vectors based on pieces of data measured on the surface of the target.

The above-described method of measuring the first reliabilities according is only one example and the general technique is not limited to using the normal distribution for the magnitude of the velocity vector; and various other techniques may be used.

Referring to FIG. 7, the processor 830 may use extracted velocity vectors 710 to calculate an actual velocity vector 670 of the target through the above-described circle-fitting or orthogonal line segment intersection method (a combination of those methods may also be used, e.g., an average of the two). That is, the processor 830 may arrange the extracted velocity vectors 710 with respect to a reference point 700 and may calculate the actual velocity 670 of the target from the extracted velocity vectors 710.

In the above-described process, the electronic device 800 is described as measuring the velocity of the target using a single radar, but the electronic device 800 may measure the velocity of the target using multiple radars. That is, the electronic device 800 may measure velocities of multiple targets using the multiple radars or may measure a velocity vector of a single target.

The processor 830 may obtain pieces (e.g., 3D points) of data about the target in the form of a bounding box from a high-resolution radar device. In the case of the high-resolution radar device other than an existing radar, a clustering process of the existing radar may be omitted by outputting a final result in the form of a bounding box. In such a case, the velocity of the target may be measured through the method presented in the above-described process using pieces of radar data existing in the bounding box.

FIG. 8 illustrates an example of an electronic device, according to one or more embodiments.

Referring to FIG. 8, an electronic device 800 may include a processor 830, a memory 850, and an output device 870 (e.g., a display). The processor 830, the memory 850, and the output device 870 may be connected to one another through a communication bus 805. The electronic device 800 may include the processor 830 for performing the at least one method described above or an algorithm corresponding to the at least one method, for operating the electronic device 800. In practice, the processor 830 may be a combination of processors (described below).

The output device 870 may display a user interface that receives a user input related to target velocity measurement states and operation provided by the processor 830. Moreover, the target velocity measurement may be used for vehicle functions such as autonomous/assisted driving, driving condition analysis, and so forth.

The memory 850 may store pieces of data related to target velocity measurement performed by the processor 830 and pieces of data obtained from a radar and a communicator. In addition, the memory 850 may store a variety of pieces of information generated by the processing process of the processor 830 described above. Furthermore, the memory 850 may store a variety of data and programs. The memory 850 may include a volatile memory or a non-volatile memory. The memory 850 may include a large-capacity storage medium such as a hard disk to store a variety of pieces of data.

In addition, the processor 830 may perform the at least one method described with reference to FIGS. 1 through 8 or an algorithm corresponding to the at least one method. In the above-described process, the processor 830 may be a hardware-implemented data processing device having a circuit that is physically structured to execute desired operations. The desired operations may include, for example, code or instructions included in a program. Such a program of instructions may be generated by compiling source code that an engineer may readily construct based on the descriptions herein. The processor 830 may be implemented as, for example, a central processing unit (CPU), a graphics processing unit (GPU), and/or a neural network processing unit (NPU). The electronic device 800 that is implemented as hardware may include, for example, a microprocessor, a CPU, a processor core, a multi-core processor, a multiprocessor, an application-specific integrated circuit (ASIC), and a field-programmable gate array (FPGA).

The processor 830 may execute a program (in the form of processor-executable instructions) and control the electronic device 800. Program code to be executed by the processor 830 may be stored in the memory 850.

The computing apparatuses, the vehicles, the electronic devices, the processors, the memories, the sensors/radars, the vehicle/operation function hardware, the displays, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims, and all variations within the scope of the claims are to be construed as being included in the disclosure.

## Claims

1. A method of determining a velocity vector of a target object, the method comprising:
obtaining pieces of radar data obtained by detecting the target object;
based on the pieces of radar data, extracting velocity vectors for respective points that correspond to the detected target object; and
calculating the velocity vector of the target object based on the velocity vectors.

2. The method of claim 1, wherein
calculating the velocity vector comprises arranging starting points of the velocity vectors to a same reference point.

3. The method of claim 2, wherein
the calculating the velocity vector further comprises:
generating an approximation circle based on endpoints of the velocity vectors as arranged to the reference point; and
calculating the velocity vector of the target object based on the reference point and a feature of the approximation circle.

4. The method of claim 3, wherein the feature of the approximation circle is the diameter of the approximation circle,

5. The method of claim 3 or 4, further comprising determining the direction passing through the reference point and the center of the approximation circle as the direction of the actual velocity of the target.

6. The method of any of claims 3-5, further comprising determining the diameter of the approximation circle as the magnitude of the actual velocity of the target.

7. The method of claim 2, wherein
the calculating the velocity vector of the target object further comprises:
generating line segments that are orthogonal to the velocity vectors, respectively, wherein the line segments originate at the endpoints of the respective velocity vectors as arranged to the reference point; and
calculating the velocity vector of the target object based on intersections of the orthogonal line segments and based on the reference point.

8. The method of claim 7, wherein the starting point of the velocity vector of the target object corresponds to the reference point and the endpoint of the velocity vector corresponds to a point that is based on the intersections.

9. The method of any of the previous claims, further comprising:
generating a data cube by performing a Fourier transformation on the pieces of radar data to obtain, for each of the pieces of radar data, a distance value, a radial velocity value, and an angle value; and
labeling and clustering, as pieces of data about the target object, pieces of data extracted by applying the data cube to a target detector configured for identifying the target object.

10. The method of any of the previous claims, wherein
the extracting of the velocity vectors comprises:
determining first reliabilities of a set of velocity vectors, and selecting the velocity vectors from among the set of velocity vectors based on the velocity vectors having first reliabilities that satisfy a first reliability threshold; and/or
the obtaining the pieces of radar data comprises:
measuring second reliabilities for the respective pieces of radar data; and
selecting, from among the pieces of radar data, pieces of the radar data whose second reliability is greater than a second threshold value, wherein the velocity vectors are extracted based on the selected pieces of radar data.

11. The method of any of the previous claims, wherein
the velocity vectors are extracted based at least in part on determining that they correspond to a surface of the target object.

12. The method of any of the previous claims, wherein
the pieces of radar data are obtained from a bounding box provided by a radar device; and/or
wherein the velocity vector of the target object represents an actual velocity of the target object and includes a vector component other than a line-of-sight vector component.

13. The method of any of the previous claims, wherein when the coordinate of a starting point of a velocity vector actually measured is apart from the coordinates of starting points of other velocity vectors for more than a predetermined level, the method comprises determining the velocity vector not to correspond to the surface of the target.

14. An electronic device comprising:
one or more processors; and
memory storing instructions configured to cause the one or more processors to:
obtain pieces of radar data obtained by detecting a target object;
based on the pieces of radar data, extract velocity vectors for respective points that correspond to the detected target object; and
calculate a velocity vector of the target object based on the velocity vectors.

15. The electronic device of claim 14, wherein
calculating the velocity vector comprises arranging starting points of the velocity vectors to be at a same reference point, wherein preferably
the calculating the velocity vector further comprises:
generating an approximation circle based on endpoints of the velocity vectors as arranged at the reference point, wherein the circle is fitted to the endpoints; and
calculating the velocity vector of the target object based on the reference point and a feature of the approximation circle; or
calculating the velocity vector further comprises:
finding intersections between lines normal to endpoints of the velocity vectors as arranged at the reference point; and
calculating the velocity vector of the target object based on the intersections..
